# EUROPEAN PATENT APPLICATION

(11) **EP 1 925 957 A1**
(43) Date of publication of application: **28.05.2008**
(21) Application number: 06782371.6
(22) Date of filing: 04.08.2006
(51) Int. Cl.: G02B 6/30

(54) **OPTICAL WAVEGUIDE MODULE**

(30) Priority: 11.08.2005 JP 2005233757
(71) Applicant: OMRON CORPORATION, Kyoto-shi, Kyoto 600-8530 (JP)
(72) Inventor: SUMINO, Toshifumi, Kyoto-shi, Kyoto 6008530 (JP); HOSOKAWA, Hayami, Kyoto-shi, Kyoto 6008530 (JP); KITAJIMA, Yasunari, Kyoto-shi, Kyoto 6008530 (JP); FUJIWARA, Hiroyuki, Kyoto-shi, Kyoto 6008530 (JP)
(74) Representative: Brykman, Georges
(86) International application number: PCT/JP2006/315513
(87) International publication number: WO 2007/018150

(57) **Abstract**

An optical waveguide bare module (11) is composed of an optical waveguide substrate wherein a circuit is formed on a substrate; and optical fiber arrays (22a, 22b) connected on the both sides of the optical waveguide substrate. The optical waveguide bare module (11) is stored in a case (12). The optical fiber arrays (22a, 22b) are provided by arranging and fixing one or more optical fibers (23), and the optical fiber arrays (22a, 22b) are adhered and fixed on the optical waveguide substrate by adjusting an optical axis. Sealing blocks (13a, 13b) are attached on the both sides of a case (12) to seal the inside of the case (12) airtight, and a structure wherein moisture does not easily enter into the case storing the optical waveguide is provided.

## Description

### TECHNICAL FIELD

The present invention relates to an optical waveguide module, particularly to an optical waveguide module with an optical waveguide substrate in which an optical circuit is formed in a resin substrate, and the optical waveguide module is used in an optical communication network.

### BACKGROUND ART

An optical waveguide bare module is used in the fields of the optical communication and the like. In the optical waveguide bare module, an optical waveguide substrate in which an optical circuit is formed in a substrate and an optical fiber array in which one or more optical fibers are fixed are bonded to each other while optical axes of the optical waveguide substrate and optical fiber array are aligned. The optical waveguide bare module is accommodated in a package to prevent shock from the outside. In the conventional optical waveguide module, as described in Patent Document 1 (Japanese Patent Publication Laid-Open No. 2003-207658), the optical waveguide bare module is accommodated in the package which is vertically separated along an axial direction of the optical fiber. In such structures, there is a limit to suppression of invasion of moisture from a bonded surface at which an upper portion and a lower portion of the package are bonded, and unfortunately deterioration is generated in a bonding agent of the optical waveguide bare module inside the package and a resin portion such as the optical waveguide substrate.

In Patent Document 2 (Japanese Patent Publication Laid-Open No. 2002-23000), a cylindrical package is used to accommodated the optical waveguide bare module therein, largely-opened end portions of the package are sealed with resins to block the inside of the package from the outside. In Patent Document 3 (Japanese Patent Publication Laid-Open No. 2001-51149), the optical waveguide bare module formed by bonding semicircular cylindrical bases is accommodated in the cylindrical base, the cylindrical base coated with a resin foaming material is accommodated in a cylindrical package, and both ends of the package are sealed with resins. However, in the structures disclosed in Patent Documents 2 and 3, because the whole surfaces of both the ends of the cylindrical package are sealed with the resins, similarly to Patent Document 1, it is difficult to completely suppress the invasion of the moisture into the package.

Patent Document 1: Japanese Patent Publication Laid-Open No. 2003-207658
Patent Document 2: Japanese Patent Publication Laid-Open No. 2002-23000
Patent Document 3: Japanese Patent Publication Laid-Open No. 2001-51149

### DISCLOSURE OF THE INVENTION

### PROBLEMS TO BE SOLVED BY THE INVENTION

In view of the foregoing, an object of the invention is to provide an optical waveguide module having high reliability against the moisture by a structure in which the moisture hardly intrudes into the case accommodating the optical waveguide.

### MEANS FOR SOLVING THE PROBLEMS

In accordance with an aspect of the invention, an optical waveguide module includes an optical waveguide bare module including an optical waveguide substrate in which an optical circuit is formed in a substrate and an optical fiber array in which one or plural optical fibers are arrayed and fixed; a hollow and cylindrical case in which the optical waveguide bare module is accommodated; and blocks which are attached to both ends of the case to seal a hollow portion of the case, and the optical waveguide module is characterized in that the optical waveguide bare module is disposed in the case and the case is sealed in an airtight manner by inserting the blocks into both the ends of the case.

According to the optical waveguide module of the invention, the optical waveguide bare module is disposed in the case sealed in the airtight manner. Therefore, the optical waveguide bare module hardly contact the moisture, and the deterioration caused by the contact with the moisture can be prevented.

In the optical waveguide module according to the aspect of the invention, preferably an inside of the case in which the blocks are attached to both the ends thereof is sealed in a reduced-pressure state. According to the aspect of the present invention, because the pressure is reduced inside the case, a force is applied to the block toward a direction in which the air is sucked in the case, and the block is hardly extruded outward due to the reduced pressure of the air enclosed in the case even if a temperature rises slightly. The case may be filled with the dried air or the case may be filled with dried nitrogen gas or inert gas.

In the optical waveguide module according to the aspect of the invention, preferably an air pressure in the case sealed by attaching the blocks to both the ends thereof is not more than one atmosphere. According to the aspect of the present invention, because the inside of the case is kept at a pressure not more than one atmosphere, the block is hardly extruded outward due to the reduced pressure of the air enclosed in the case. The case may be filled with the dried air or the case may be filled with dried nitrogen gas or inert gas.

In the optical waveguide module according to the aspect of the invention, preferably the optical waveguide bare module is accommodated in the case along with the bare module support member while fixed to a bare module support member. According to the aspect of the present invention, because the optical waveguide bare module is reinforced by fixing the optical waveguide bare module to the bare module protective member, the optical waveguide bare module is hardly broken during handling such as the insertion of the optical waveguide bare module into the case.

In the optical waveguide module according to the aspect of the invention, preferably both ends of the bare module support member are bent to form a surface perpendicular to a lengthwise direction of the case. According to the aspect of the invention, because the block is stopped while abutting the portion in which both the ends of the bare module protective member are bent, the block is not brought closer to the optical waveguide bare module from the bent portion of the bare module protective member, and the block is not excessively put in the case to break the optical waveguide bare module. Additionally, because a predetermined distance can be provided between the optical waveguide bare module and the block, the optical fiber breakage caused by forced bending is not generated even if misalignment is generated between the optical waveguide bare module and the optical fiber hole of the block.

In the optical waveguide module according to the aspect of the invention, preferably a projection is provided at a position where the block of the case is attached in an inner surface of the case. In the optical waveguide module according to the aspect of the invention, preferably in a portion in which a step is provided in an outer peripheral surface of the block so as to be inserted into the case, a sectional area of an outside portion is smaller than a sectional area of an inside portion. According to these aspects of the present invention, because a predetermined gap can be formed between the case and the block, the bonding agent or resin can be caused to flow into the gap even if a spherical hardening agent or filler or the like is mixed in the bonding agent or resin or the like.

In the optical waveguide module according to the aspect of the invention, preferably an optical fiber hole is made in the block to draw an optical fiber to an outside, and a gap between the case and the block and the optical fiber hole in the block are filled with a bonding agent or a resin having low moisture permeability and the bonding agent or resin is hardened. In the optical waveguide module according to the aspect of the invention, preferably an evacuation hole is provided in the block to evacuate air in the case. According to these aspects of the present invention, because the fiber hole dedicated to the insertion of the optical fiber is made, the optical fiber connected to the optical waveguide bare module can be drawn to the outside. Because the gap connecting the inside of the case and the outside is closed by filling the gap with the bonding agent or resin having low moisture permeability, the moisture hardly invades into the case from the gap. Because the evacuation hole is made independently of the fiber hole, the moisture in the case can be released to the outside of the case through the evacuation hole by baking or the like after the case and the block are fixed and after the block and the optical fiber are fixed.

In the optical waveguide module according to the aspect of the invention, preferably the block is divided into two. According to the aspect of the present invention, because the two divided parts are bonded to form the block, when the two divided parts are combined to make the optical fiber hole, the trouble of inserting the long optical fiber into the block is saved.

In the optical waveguide module according to the aspect of the invention, preferably the evacuation hole is sealed by covering an opening thereof with a plate. In the optical waveguide module according to the aspect of the invention, preferably the evacuation hole is sealed by closing an opening thereof with a ball whose diameter is larger than the opening. According to these aspects of the present invention, because the evacuation hole is closed by the plate of ball, the moisture hardly invades into the case when compared with the case in which evacuation hole is simply closed by the resin or bonding agent. Particularly, in the case of the use of the ball, the ball is sucked into a flow of the bonding agent or resin with which the evacuation hole is filled, and the ball rolls automatically into the position where the evacuation hole is closed by the ball, so that the evacuation hole can easily be sealed to shorten a time necessary to the process.

In the optical waveguide module according to the aspect of the invention, preferably the block is made of a material having low moisture permeability. In the optical waveguide module according to the aspect of the invention, preferably the case is made of a material having low moisture permeability. According to these aspects of the present invention, because the block and the case are made of the materials having the low moisture permeability, the moisture does not invade into the case through the block and case. A metal and a ceramic can be used as the material having the low moisture permeability.

In the optical waveguide module according to the aspect of the invention, preferably a sheet absorbing moisture is provided around the optical waveguide bare module. Accordingly, because the sheet can absorb the moisture invading into the case from the outside, the optical waveguide bare module hardly contacts the moisture.

In the optical waveguide module according to the aspect of the invention, preferably an optical fiber protective member made of an elastic material is attached to an end portion of the block. According to the aspect of the present invention, the optical fiber protective members are attached to both the ends of the case to prevent the bending over the limit of the optical fiber drawn to the outside of the case.

In the optical waveguide module according to the aspect of the invention, preferably the optical fiber protective member is attached to the block by fitting a protrusion provided in the block into a recess provided in the optical fiber protective member. According to the aspect of the present invention, the optical fiber protective member is attached only by fitting the protrusion provided in the block into the recess provided in the optical fiber protective member, so that the alignment can easily be performed between the block and the optical fiber protective member. According to these aspect of the present invention, because the protrusion of the block and the recess of the optical fiber protective member are fitted and bonded, the block and the optical fiber protective member are fixed more strongly compared with the case in which flat surfaces of the block and the optical fiber protective member are bonded to each other.

The constituents described in the invention can arbitrarily be combined as much as possible.

### BRIEF DESCRIPTION OF THE DRAWINGS

Fig. 1 is an exploded side view showing an optical waveguide module according to a first embodiment of the invention.
Fig. 2 is a side view (excluding a hygroscopic sheet in a side face) showing an optical waveguide bare module constituting the optical waveguide module of the first embodiment.
Figs. 3(a) and 3(b) are enlarged top views showing end portions of the optical waveguide bare module of Fig. 2 respectively.
Figs. 4(a) and 4(b) are views showing the optical waveguide module of Fig. 2 when viewed from X1 and X1' directions respectively.
Fig. 5(a) is a side view of a case. Fig. 5(b) is a view showing the case when viewed from an X2 direction of Fig. 5(a).
Fig. 6(a) is a side view showing a sealing block used in the optical waveguide module of the first embodiment. Fig. 6(b) is a view showing the sealing block when viewed from a Y1 direction of Fig. 6(a).
Fig. 7(a) is a side view showing a sealing block different from the sealing block used in the optical waveguide module of the first embodiment. Fig. 7(b) is a view showing the sealing block when viewed from a Y2 direction of Fig. 7(a).
Fig. 8 is a view explaining a state in which the sealing block shown in Fig. 6 is attached to the case.
Fig. 9(a) is a side view showing a rubber boot used in the optical waveguide module of the first embodiment. Fig. 9(b) is a view showing the rubber boot when viewed from a Y3 direction of Fig. 9(a).
Fig. 10(a) is a side view showing a rubber boot different from the rubber boot used in the optical waveguide module of the first embodiment. Fig. 10(b) is a view showing the rubber boot when viewed from a Y4 direction of Fig. 10(a).
Fig. 11 is a view explaining a method of producing the optical waveguide module of the first embodiment.
Fig. 12 is a successive view of Fig. 11.
Fig. 13(a) is a successive view of Fig. 12. Fig. 13(b) is a successive view of Fig. 13(a).
Fig. 14 is a sectional view for explaining a method of sealing an evacuation hole of the sealing block.
Fig. 15 is a sectional view showing a state in which the rubber boots are detached from an optical waveguide module according to a second embodiment of the invention.
Fig. 16 is a sectional view taken along a line Z-Z' of Fig. 15.
Fig. 17 is a side view showing a state in which an optical waveguide bare module is bonded to an inner frame.
Fig. 18 is a schematic perspective view of the inner frame.
Fig. 19 is an enlarged sectional view showing a portion to which an optical waveguide module according to a third embodiment of the invention is attached.
Fig. 20(a) is a side view showing a sealing block used in the optical waveguide module of the third embodiment. Fig. 20(b) is a view showing the sealing block when viewed from a Y5 direction of Fig. 20(a).
Fig. 21 (a) is a side view showing a sealing block different from the sealing block of Fig. 20(a) used in the optical waveguide module of the third embodiment. Fig. 21 (b) is a view showing the sealing block when viewed from a Y6 direction of Fig. 21 (a).
Figs. 22(a) and 22(b) are views for explaining a method of sealing an evacuation hole of a sealing block of a fourth embodiment.
Fig. 23(a) is a side view showing a sealing block of a fifth embodiment. Fig. 23(b) is a view showing the sealing block when viewed from a Y7 direction of Fig. 23(a).

### Explanations of Symbols

- 1 to 4: optical waveguide module
- 11: optical waveguide bare module
- 12: case
- 13: sealing block
- 14: rubber boot
- 21: optical waveguide substrate
- 22a and 22b: optical fiber array
- 23: optical fiber
- 24: hygroscopic sheet
- 31: V-groove substrate
- 32: cover glass
- 33: hollow portion
- 34: projection
- 42: fiber hole
- 43: evacuation hole
- 45: sealing plate
- 46: fitting portion
- 51: fiber drawing hole
- 52: fitting portion
- 61: inner frame
- 65: step portion
- 69: sealing ball
- 71: upper part
- 72: lower part

### BEST MODE FOR CARRYING OUT THE INVENTION

Embodiments of the invention will be described in detail with reference to the drawings. However, obviously the invention is not limited to the following embodiments.

### First Embodiment

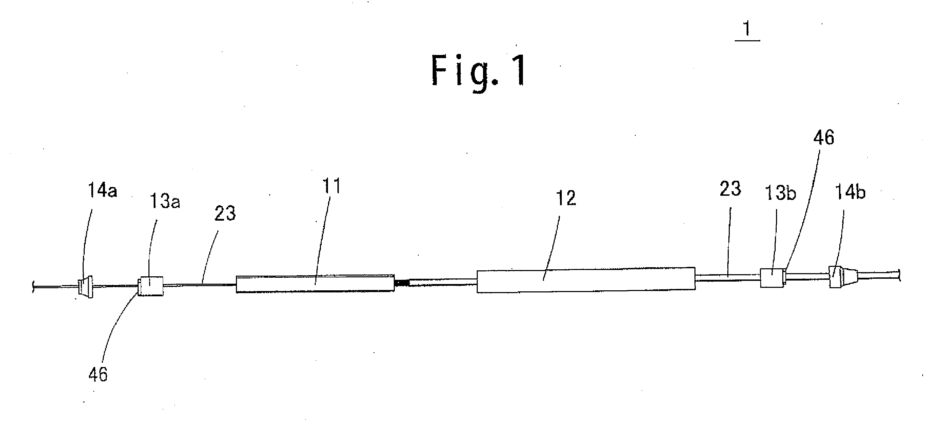

Fig. 1 is an exploded view showing an optical waveguide module 1 according to a first embodiment of the invention. The optical waveguide module 1 includes an optical waveguide bare module 11, a case 12, sealing blocks 13a and 13b, and rubber boots 14a and 14b.

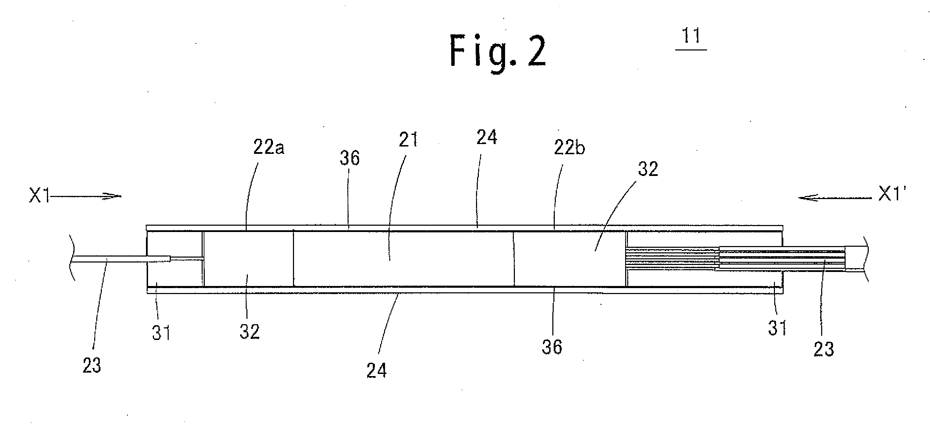

Fig. 2 is a side view showing the optical waveguide bare module 11. The optical waveguide bare module 11 includes an optical waveguide substrate 21 and optical fiber arrays 22a and 22b. The optical waveguide substrate 21 has a substantially rectangular shape in a section perpendicular to a center axis. In the optical waveguide substrate 21, an optical circuit is formed in a substrate using a resin having a different refractive index. In the optical fiber arrays 22a and 22b, one or more optical fibers 23 are aligned and fixed. The optical waveguide substrate 21 and the optical fiber arrays 22a and 22b are adjusted such that optical axes thereof are aligned, and the optical waveguide substrate 21 and the optical fiber arrays 22a and 22b are fixed using a bonding agent or the like. Therefore, in the optical waveguide bare module 11, a light beam propagating through one optical fiber can be branched and light beams incident from plural optical fiber ends and propagating through the optical fibers can be combined. Hygroscopic sheets 24 are bonded to four surrounding surfaces parallel to the optical axes of the optical waveguide substrate 21 and optical fiber arrays 22a and 22b using bonding agents 36. Fig. 2 shows the sate in which the hygroscopic sheet 24 in the side face is removed.

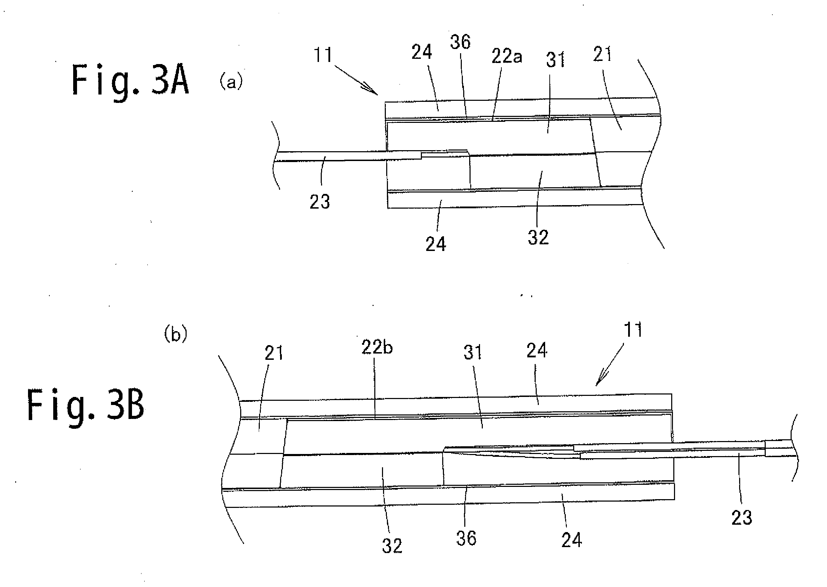

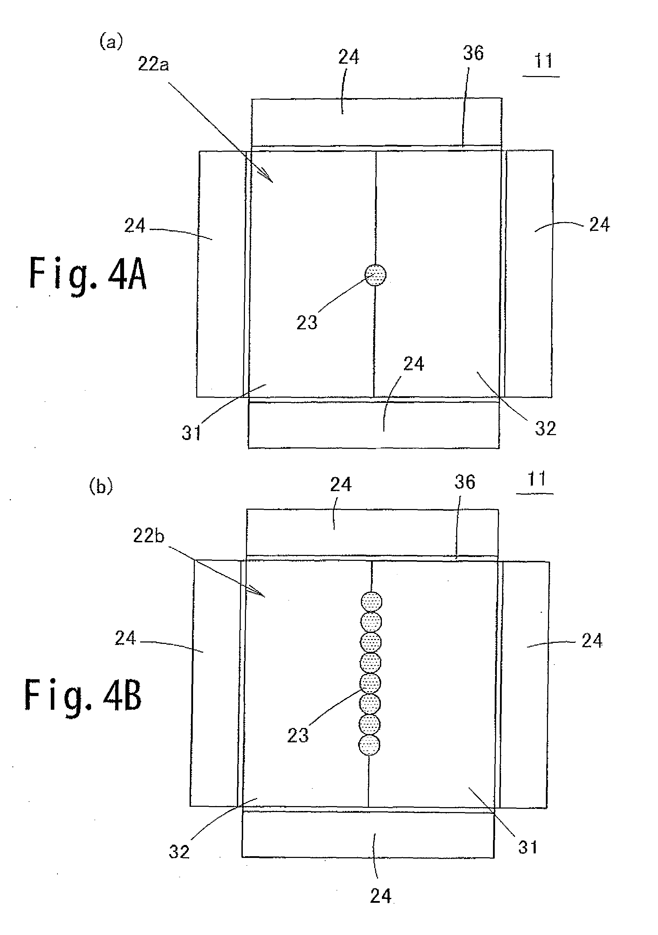

Figs. 3(a) and 3(b) are top views showing neighborhoods of end portions of the optical waveguide bare module 11 in which the hygroscopic sheet 24 is detached from the top surface respectively. Figs. 4(a) and 4(b) are views showing the optical waveguide module 11 when viewed from X1 and X1' directions of Fig. 2. As shown in Figs. 3(a) and 3(b), in the optical fiber arrays 22a and 22b, the optical fiber 23 is sandwiched between a V-groove substrate 31 and a cover glass 32 while aligned and positioned, and the optical fiber 23 is bonded and fixed using the bonding agent or the like. In the first embodiment, the optical fiber arrays in which one optical fiber 23 and eight optical fibers 23 are fixed are used as the optical fiber arrays 22a and 22b respectively. The hygroscopic sheet 24 is made of a rectangular, flat plate-shaped material having excellent hygroscopicity. Desirably a thickness of the bonding agent 36 with which the hygroscopic sheet 24 is bonded is equalized in each hygroscopic sheet 24.

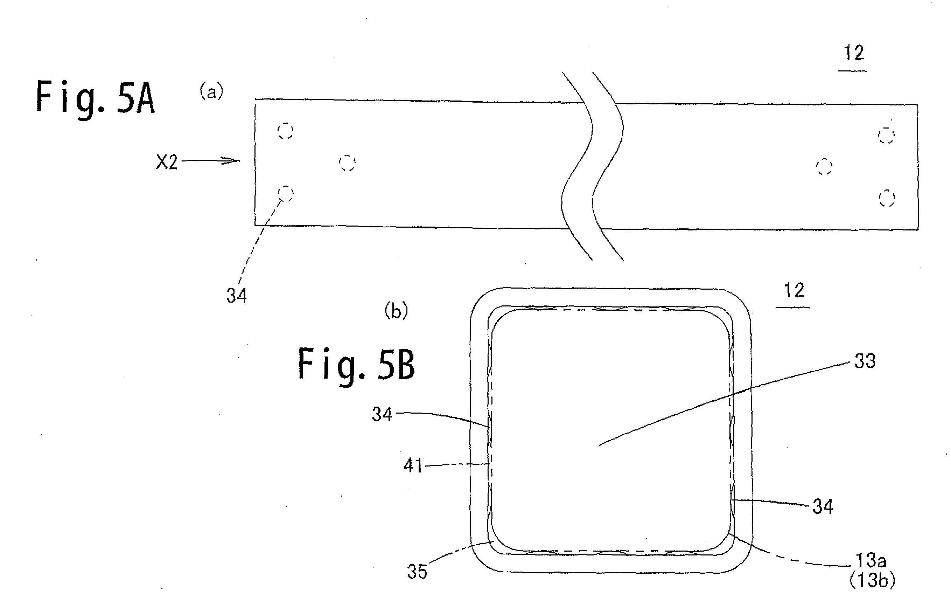

Fig. 5(a) is a side view of the case 12, and Fig. 5(b) is a view showing the case 12 when viewed from an X2 direction of Fig. 5(a). Positions where the sealing blocks 13a and 13b are disposed are shown by an alternate long and two short dashes line in Fig. 5(b). The case 12 is formed in a square-pole shape while having a hollow portion 33. The optical waveguide bare module 11 is inserted in and rigidly bonded to the hollow portion 33, the sealing blocks 13a and 13b are inserted in both ends of the hollow portion 33, and a sealing agent 35 is poured between the case 12 and the sealing blocks 13a and 13b and rigidly bonded. A material having low moisture permeability can be used as the sealing agent 35. Plural projections 34 are projected in four surfaces inside the hollow portion 33 at the position where the sealing blocks 13a and 13b are fixed near the end portions of the case 12, which facilitates the pouring of the sealing agent 35 between the case 12 and the sealing blocks 13a and 13b. Sizes of the projections 34 are equal to one another, and the projections 34 are formed so as to overlap one another when the four surfaces in which the projections 34 are formed overlap one another. As to a height of the projection 34, it is necessary to sufficiently pass the hardening agent or filler included in the sealing agent 35. In the first embodiment, because the hardening agent included in the sealing agent 35 has the size of about 20 µm, the height of the projection 34 is set in a range of about 20 to about 80 µm. A length of the case 12 is equal to or slightly longer than a total length in an optical axis direction of the optical waveguide substrate 21, optical fiber arrays 22a and 22b, and sealing blocks 13a and 13b.

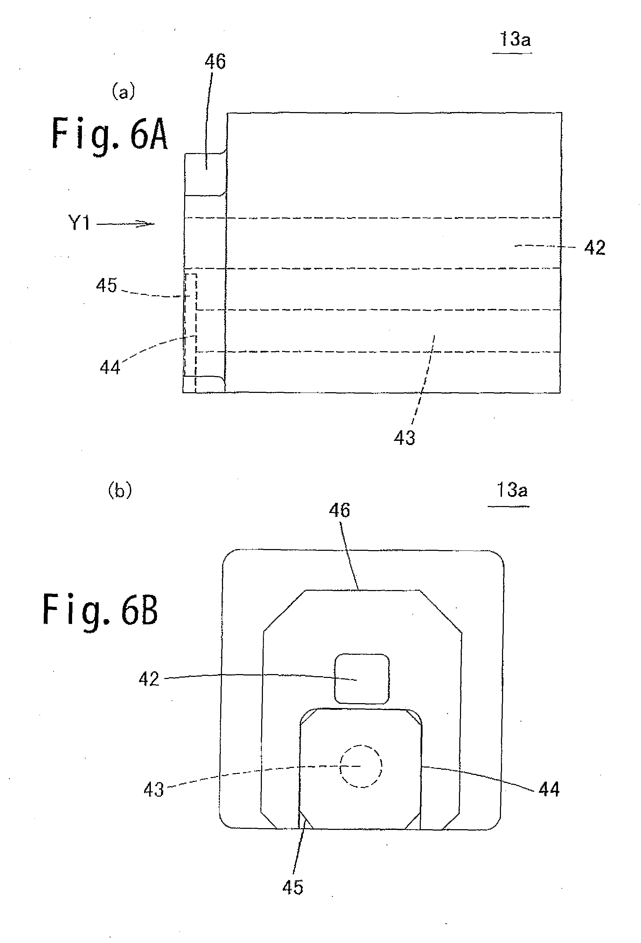

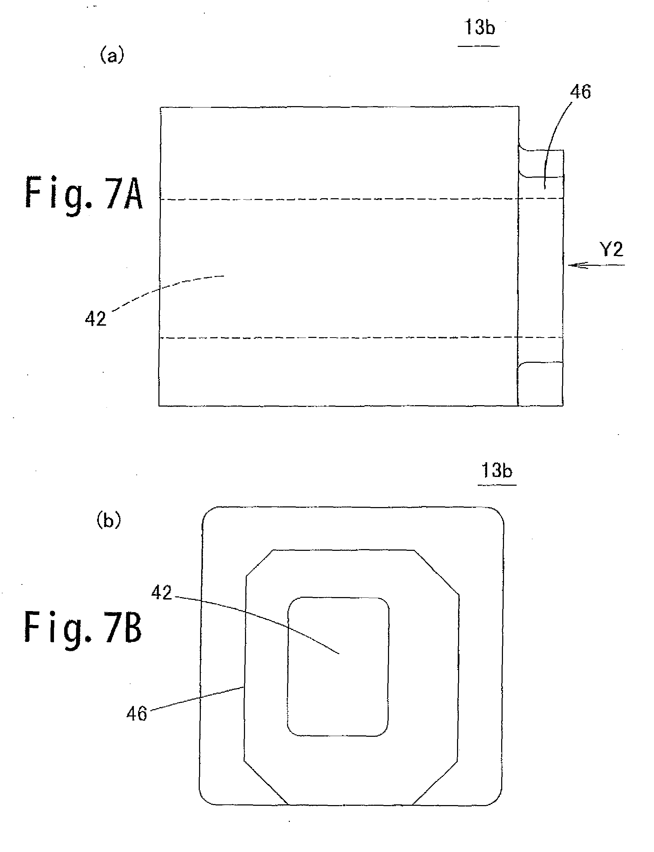

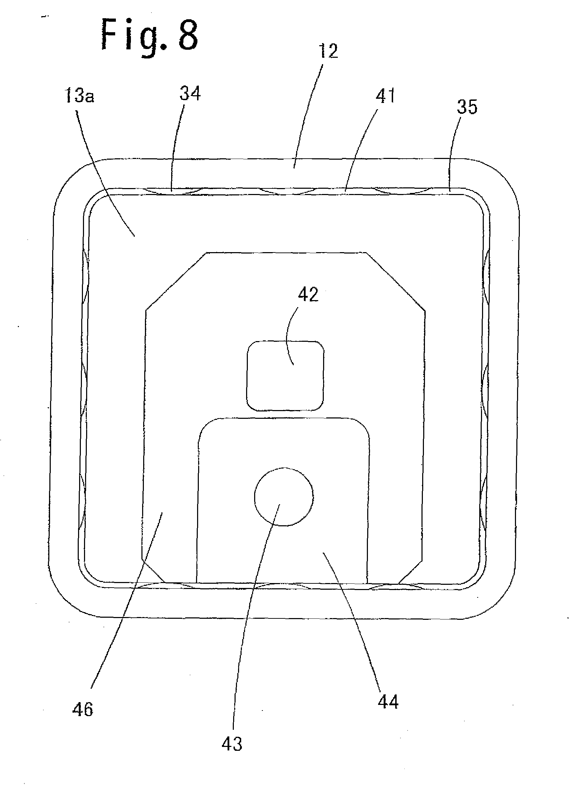

The sealing blocks 13a and 13b are made of a material, such as a metal and a dense ceramic, which has extremely-low moisture permeability. The sealing block 13a attached onto the side of the optical fiber array 22a differs from the sealing block 13b attached onto the side of the optical fiber array 22b in the shape. Fig. 6(a) is a side view showing the sealing block 13a, and Fig. 6(b) is a view showing the sealing block 13a when viewed from a Y1 direction of Fig. 6(a). Fig. 7(a) is a side view showing the sealing block 13b, and Fig. 7(b) is a view showing the sealing block 13b when viewed from a Y2 direction of Fig. 7(b). When sealing block 13a and the sealing block 13b are viewed from the Y1 direction and the Y2 direction respectively, the sealing block 13a and the sealing block 13b have the substantially rectangular outer shape inscribed in an inner circle of the hollow portion of the case 12, and the heights and widths of the sealing blocks 13a and 13b are shorter than the hollow portion of the case 12 by the substantially double height of the projection 34. Accordingly, as shown in Fig. 8, when the sealing block 13a (and 13b) is inserted in the case 12, the sealing block 13a (and 13b) is positioned by the projection 34 to form a gap 41 having a width substantially similar to the height of the projection 34 between the case 12 and the surround of the sealing block 13a (and 13b). The sealing agent 35 is poured into the gap 41 and hardened to fix the case 12 and the sealing block 13a (and 13b) to each other. Fiber holes 42 are made in the sealing blocks 13a and 13b to take out the optical fiber 23 attached to the optical waveguide bare module 11 to the outside. After the case 12 and the sealing block 13a (and 13b) are fixed to each other, the fiber hole 42 is also filled with the sealing agent 35, and the sealing agent 35 is hardened to fix the sealing block 13a (and 13b) and the optical fiber 23 to each other. In the sealing block 13a, an evacuation hole 43 is made to evacuate the air in the case 12, and a sealing plate attaching portion 44 is provided near an evacuation hole 43 while recessed in a surface orientated toward the outside of the case 12. The evacuation hole 43 is used to evacuate the air and moisture in the case 12. After the evacuation of the case 12, the evacuation hole 43 is filled with the sealing agent 35 and a sealing plate 45 is fixed to a sealing plate attaching portion 44 using the sealing agent 35, which maintains the inside of the case 12 at a low pressure state. The sealing plate attaching portion 44 has the thickness such that the sealing plate 45 is lower than the surround when the sealing plate 45 is bonded to the sealing plate attaching portion 44 using the sealing agent 35. Accordingly, after the air and the moisture are evacuated from the inside of the case 12 through the evacuation hole 43, the evacuation hole 43 is filled with a resin having the low moisture permeability and the sealing plate 45 is bonded to the sealing plate attaching portion 44, which allows the inside of the case 12 to be maintained in the low pressure state. Outer surfaces of the sealing blocks 13a and 13b are partially projected to constitute fitting portions 46. When the sealing blocks 13a and 13b are attached to the case 12, the fitting portions 46 are projected outward from end faces of the case 12.

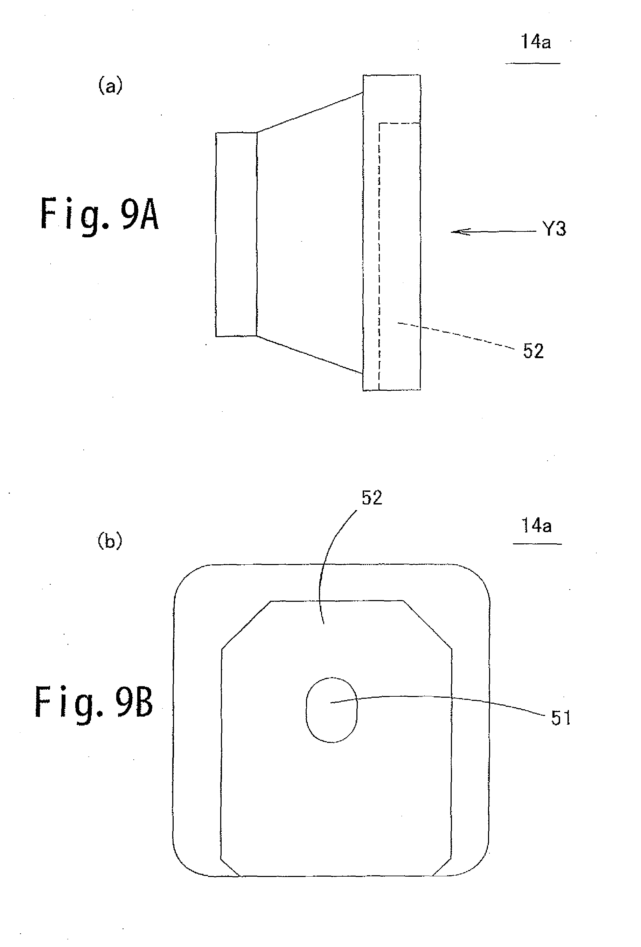

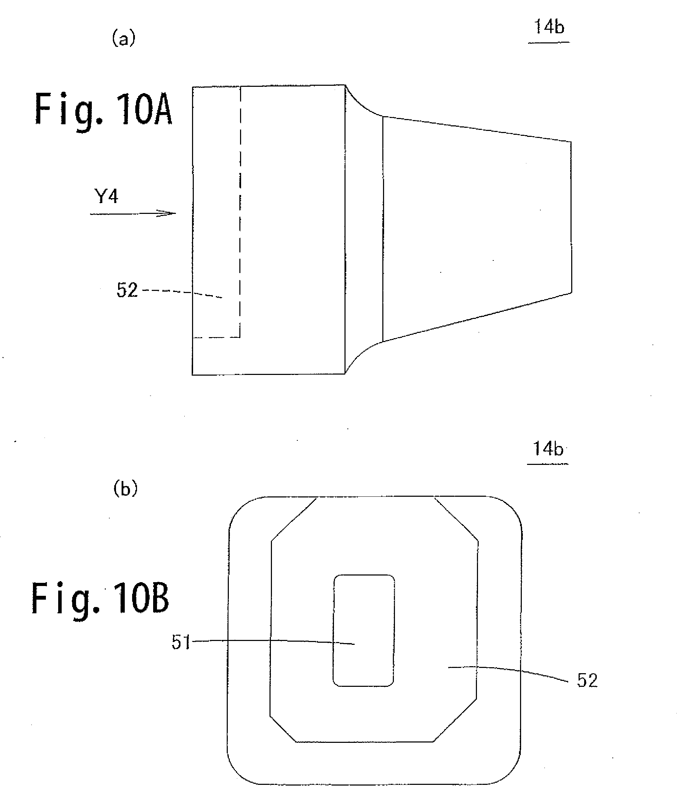

The optical fiber protective member, i.e., the rubber boots 14a and 14b are used to prevent the breakage of the optical fiber 23 drawn through the sealing blocks 13a and 13b. The sealing blocks 13a and 13b are broken by bending the sealing blocks 13a and 13b at a sharp angle. Similarly to the sealing blocks 13a and 13b, the rubber boot 14a attached onto the side of the optical fiber array 22a differs from the rubber boot 14b attached onto the side of the optical fiber array 22b in the shape. Fig. 9(a) is a side view showing the rubber boot 14a, and Fig. 9(b) is a view showing the rubber boot 14a when viewed from a Y3 direction of Fig. 9(a). Fig. 10(a) is a side view showing the rubber boot 14b, and Fig. 10(b) is a view showing the rubber boot 14b when viewed from a Y4 direction of Fig. 10(a). The rubber boots 14a and 14b are made of an elastic material such as rubber and a resin, and the rubber boots 14a and 14b are bonded to surfaces in which fitting portions 46 of the sealing blocks 13a and 13b are formed. Sectional areas of the rubber boots 14a and 14b are decreased as the rubber boots 14a and 14b are away from the sealing blocks 13a and 13b respectively, and the optical fibers 23 inserted in the rubber boots 14a and 14b can freely be formed to some extent. Because the rubber boots 14a and 14b are made of the elastic material, the rubber boots 14a and 14b are also deformed with the deformation of the optical fiber 23, whereby a large load is not applied onto the optical fiber 23. In the rubber boots 14a and 14b, fiber drawing holes 51 are made at positions corresponding to the fiber holes 42 made in the sealing blocks 13a and 13b respectively. The optical fibers 23 drawn from the fiber holes 42 of the sealing blocks 13a and 13b are inserted into the fiber drawing holes 51 and drawn from the opposite surfaces to the surfaces facing the sealing blocks 13a and 13b. In each of the surfaces facing the sealing blocks 13a and 13b of the rubber boots 14a and 14b, a fitting portion 52 is formed while recessed at the position corresponding to the fitting portion 46. The rubber boots 14a and 14b are bonded and fixed to the sealing blocks 13a and 13b using the bonding agent 36 or the like while fitting portion 52 is fitted in the fitting portion 46. The fiber hole 42 is aligned with the fiber drawing hole 51 when the rubber boots 14a and 14b are bonded and fixed to the sealing blocks 13a and 13b.

Alternatively, the case is formed longer than the length of the case 12, the sealing blocks 13a and 13b are put in the case 12, and the rubber boots 14a and 14b may be inserted into the end portions of the case 12.

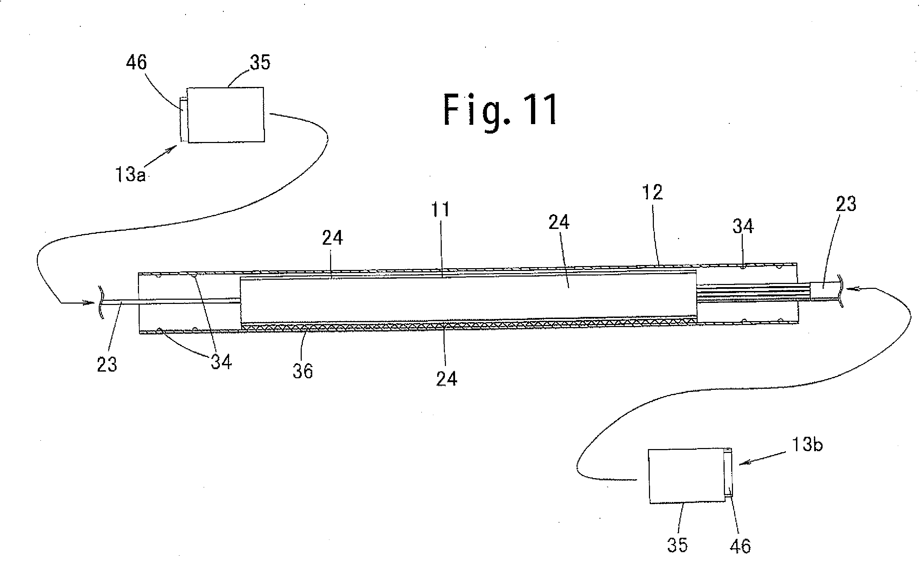

A process of assembling the optical waveguide module 1 will be described with reference to Figs. 11 to 13. First, the optical waveguide substrate 21 and the optical fiber arrays 22a and 22b are bonded while the optical axes thereof are adjusted. The hygroscopic sheet 24 are bonded and fixed to the surrounds of the optical waveguide substrate 21 and optical fiber arrays 22a and 22b using the bonding agent 36 to produce the optical waveguide bare module 11 (Fig. 2). The bonding agent 36 which can be bonded and fixed for about five minutes at ordinary temperatures (range of 23 ± 3°C) is used in bonding each hygroscopic sheet 24.

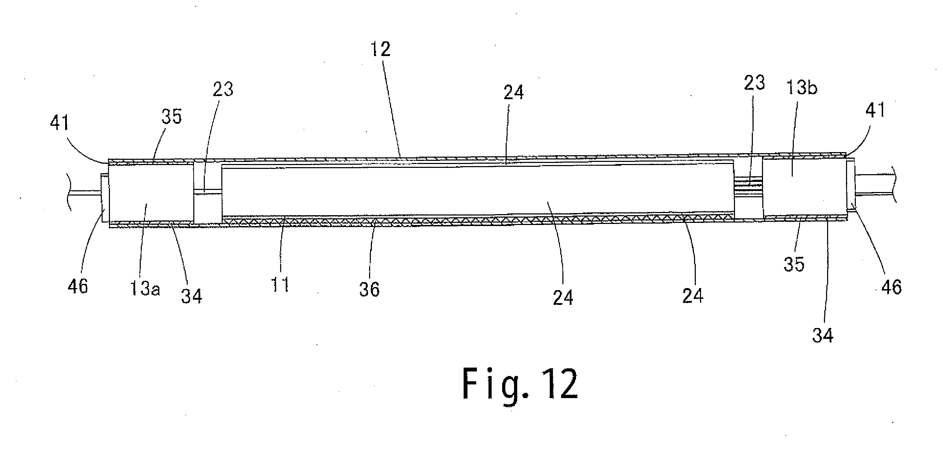

As shown in Fig. 11, the bonding agent 36 is applied onto the lower surface of the optical waveguide bare module 11, the optical waveguide bare module 11 is positioned by inserting the optical waveguide bare module 11 to the center of the case 12, and the bonding agent 36 is hardened to fix the optical waveguide bare module 11 to the case 12. Then, the sealing blocks 13a and 13b are prepared while the unhardened sealing agent 35 is applied to the entire outer peripheral surfaces of the sealing blocks 13a and 13b, the sealing blocks 13a and 13b are inserted into the case 12 from both sides of the case 12, and the sealing blocks 13a and 13b are disposed at the positions where only the fitting portions 46 of the sealing blocks 13a and 13b are projected from the end portions of the case 12, i.e., the positions where surrounds of the fitting portions 46 of the sealing blocks 13a and 13b are flush with the end portions of the case 12. In the case where the gap 41 is insufficiently filled with the sealing agent 35, the unhardened sealing agent 35 is poured into the gap 41. The fiber holes 42 of the sealing blocks 13a and 13b are filled by pouring the sealing agents 35 in the fiber holes 42. The sealing agents 35 poured in the gap 41 and fiber holed 42 are hardened (Fig. 12). A resin which is hardened for about two to about three hours at a temperature of about 95°C is used as the sealing agent 35. Because a high temperature is required to harden the sealing agent 35, desirably the sealing agent 35 is stemmed by the bonding agent 36 such that the sealing agent 35 does not excessively flow between the fibers with increasing fluidity of the sealing agent 35 at that time.

After hardening the sealing agent 35, the fiber holes 42 of the sealing blocks 13a and 13b are filled with the sealing agent 35 again, and the sealing agent 35 is hardened. The sealing blocks 13a and 13b and the optical fiber 23 are fixed while the fiber holes 42 are sealed.

Then, the case 12 is heated to 90°C in a vacuum atmosphere not more than 133 Pa to perform vacuum baking for about one hour, and a water content in the case 12 is released to the outside of the case 12. A time necessary to sufficiently suck a bonding agent 37 in the evacuation hole 43 of the case 12 is previously determined by investigating conditions, and the case 12 is gradually cooled for the time to fill the bonding agent 37 with the evacuation hole 43. Because the bonding agent is applied while the case 12 is gradually cooled, the inner pressure of the case 12 becomes the reduced-pressure atmosphere compared with the outer pressure of the surround of the case, the applied bonding agent is sucked to fill the entire longitudinal direction of the evacuation hole 43 with the bonding agent. The bonding agent 37 is an ordinary-temperature hardening type bonding agent different from the bonding agent 36.

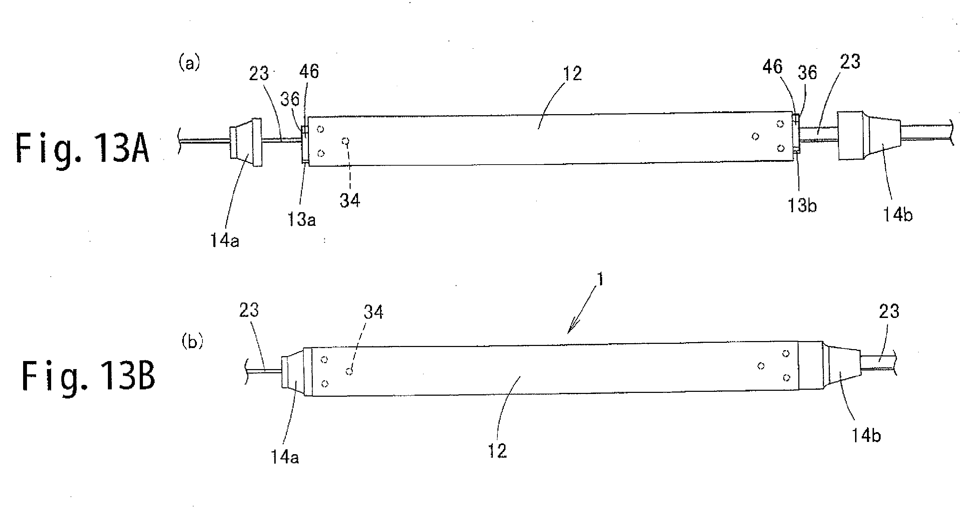

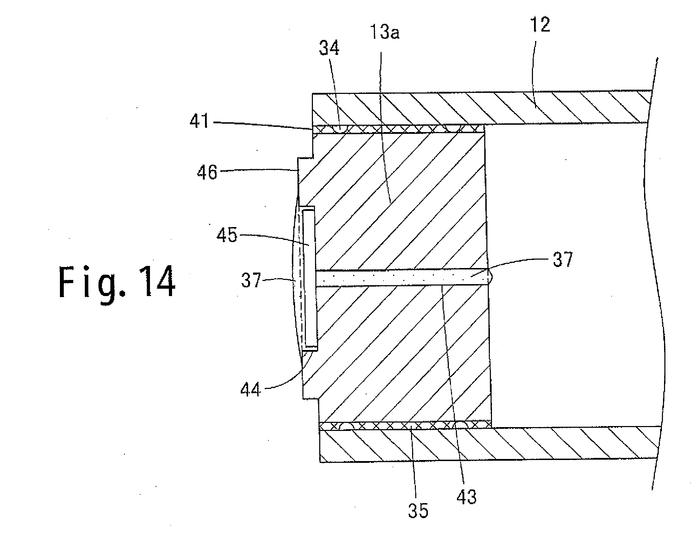

A bonding agent sucking mechanism will be described below. As shown in Fig. 14, in filling and sealing the evacuation hole 43 with and by the bonding agent 37, the bonding agent 37 is poured into the evacuation hole 43 while the suction of the bonding agent 37 and a degree of filling are confirmed. When the evacuation hole 43 is sufficiently filled with the bonding agent 37, the sealing plate 45 is attached to the sealing plate attaching portion 44 to close the evacuation hole 43, the bonding agent 37 is applied from above the sealing plate 45 again, and the bonding agent 37 is hardened. When the bonding agent 37 with which the evacuation hole 43 is filled is sufficiently hardened, the heating is performed at 85°C for about one hour, and the bonding agent 36 is applied to the whole surfaces facing the rubber boots 14a and 14b of the sealing blocks 13a and 13b as shown in Fig. 13(a). Then, the sealing blocks 13a and 13b are attached to the rubber boots 14a and 14b while the fitting portions 46 of the sealing blocks 13a and 13b are fitted in the fitting portions 52 of the rubber boots 14a and 14b, and the bonding agent 36 is hardened to fix the rubber boots 14a and 14b. Therefore, the optical waveguide module 1 is completed as shown in Fig. 13 (b). In the optical waveguide module 1 as a completed product in which the bonding agent 37 is hardened to fix the sealing blocks 13a and 13b, the inner pressure of the case 12 does not always become the reduced-pressure state due to influences of generated gas and the like.

In the optical waveguide module 1 produced in the above-described way, the surround of the optical waveguide bare module 11 is substantially covered with the case 12 and sealing blocks 13a and 13b, and the gap is filled with the sealing agent 35 having the low moisture permeability, the hygroscopic sheet 24 is bonded to the surround of the optical waveguide bare module 11 using the bonding agent 36, and the evacuation hole 43 is sealed with the bonding agent 37. Therefore, the moisture hardly invades into the case 12, and the optical waveguide bare module 11 is not deteriorated by the moisture.

After the heating is performed at the temperature of 85°C for about one hour, a leak test may be performed to confirm whether or not the inside of the case 12 is sufficiently sealed from the outside. The leak test can distinguish the sufficiently-sealed optical waveguide module 1 from the insufficiently-sealed optical waveguide module 1.

### Second Embodiment

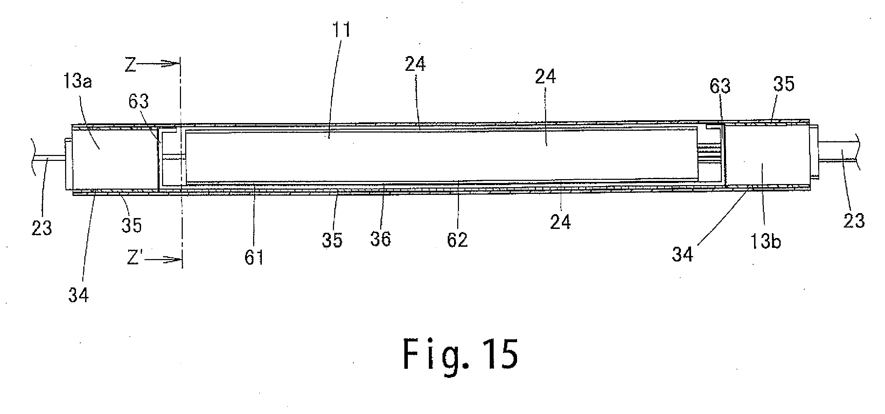

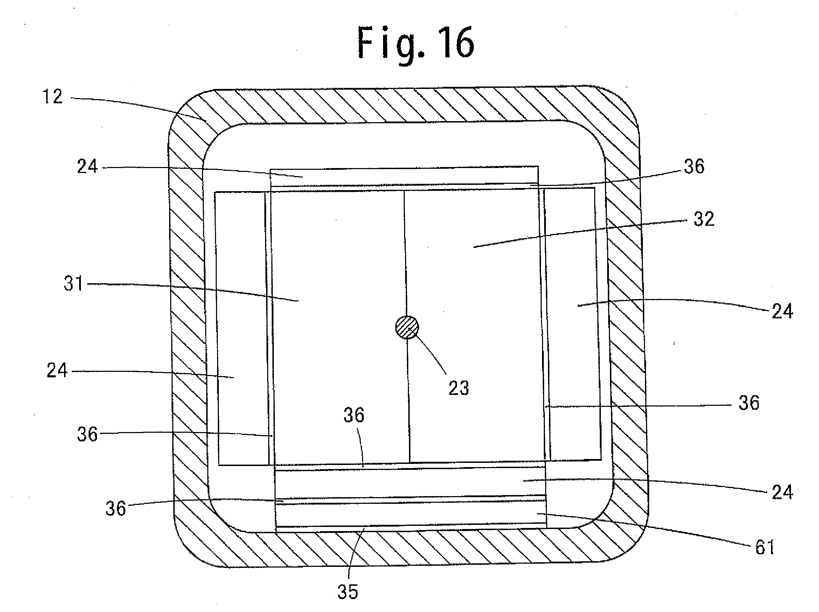

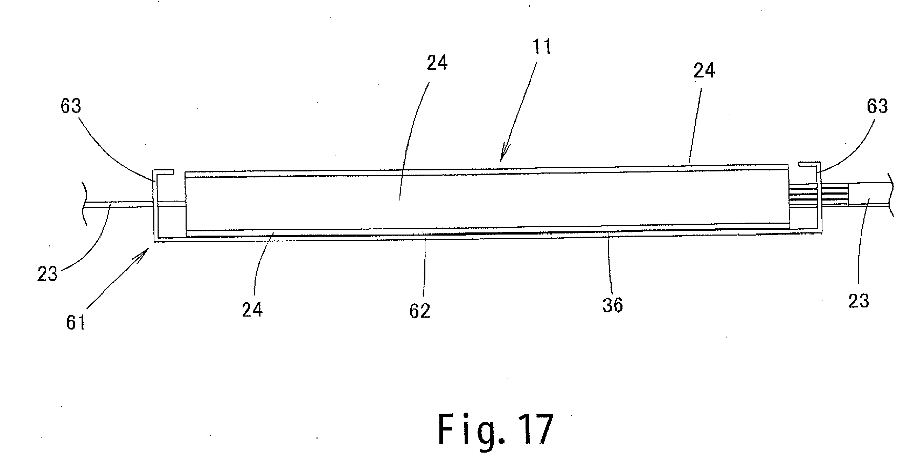

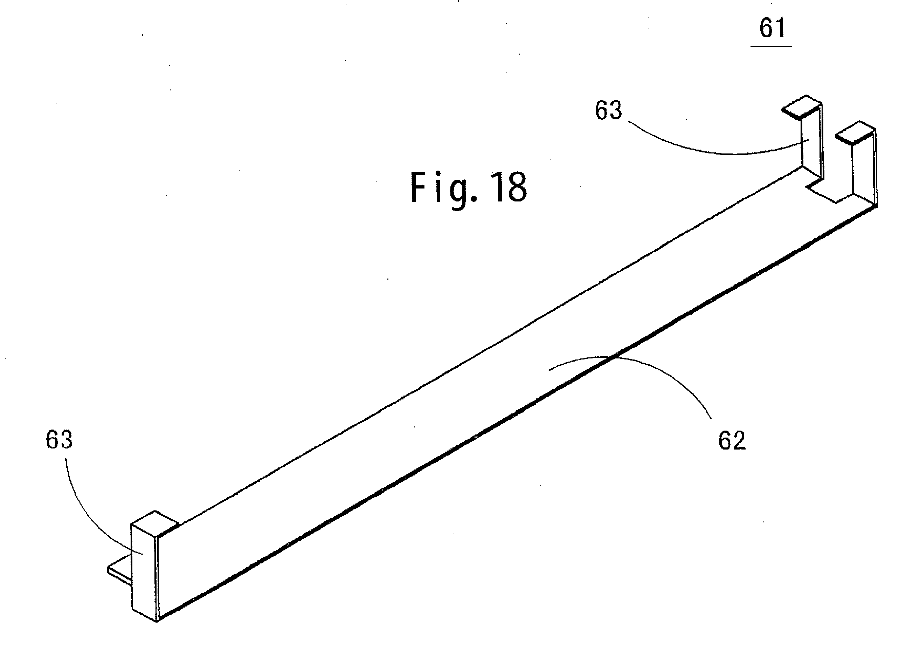

In the optical waveguide module 1 of the first embodiment, because only the optical waveguide substrate 21 and the optical fiber arrays 22a and 22b are bonded in the optical waveguide bare module 11, the optical waveguide bare module 11 is possibly broken due to the impact during the handling such as the insertion of the optical waveguide bare module 11 into the case 12. In an optical waveguide module 2 according to a second embodiment of the invention, the optical waveguide bare module 11 is reinforced by fixing the optical waveguide bare module 11 onto a bare module support member, i.e., an inner frame 61, thereby facilitating the handling of the optical waveguide bare module 11. Fig. 15 is a schematic sectional view showing a state in which the rubber boots 14a and 14b are detached from the optical waveguide module 2. Fig. 16 is a sectional view taken along a line Z-Z' of Fig. 15. Fig. 17 is a side view showing a state in which the optical waveguide bare module 11 is bonded to an inner frame 61. Fig. 18 is a perspective view of the inner frame 61.

As shown in Fig. 18, the inner frame 61 includes a web plate 62 and a guide portion 63, and the inner frame 61 is formed slightly longer than the total length of the optical waveguide substrate 21 and optical fiber arrays 22a and 22b. The optical waveguide bare module 11 is disposed in the case 12 while bonded and fixed onto the web plate 62 of the stainless-steel inner frame 61 using the bonding agent 36. The case 12 and the web plate 62 of the inner frame 61 are bonded using the sealing agent 35.

As shown in Fig. 18, the guide portion 63 of the inner frame 61 is formed at both ends of the web plate 62 in a direction substantially perpendicular to the web plate 62, a front end of the guide portion 63 is bent in substantially parallel to the web plate 62 toward the side of the optical waveguide bare module 11 while a curvature exists slightly at a corner. The height of the guide portion 63 is substantially equal to those of the sealing blocks 13a and 13b. Therefore, even if the sealing blocks 13a and 13b are excessively inserted, the sealing blocks 13a and 13b are stopped by abutting on the guide portions 63, and the guide portions 63 prevent the sealing blocks 13a and 13b from approaching the side of the optical waveguide bare module 11. That is, the sealing block 13a (or 13b) and the optical fiber array 22a (or 22b) are disposed while a small gap is interposed therebetween. Accordingly, the breakage of the optical fiber 23 caused by the forced bending is prevented when the fiber hole 42 of the sealing block 13a (or 13b) is slightly misaligned with the optical fiber 23 of the optical fiber array 22a (or 22b) in the bonding.

The vertical misalignment is hardly generated because a gap is hardly formed between the front end of the guide portion 63 and the upper surface of the hollow portion 33 of the case 12. The front end of the guide portion 63 is bent toward the side of the optical waveguide bare module 11, and the optical waveguide bare module 11 is hardly hooked in the entrance of the case 12 or the projection 34 when the optical waveguide bare module 11 is inserted in the case 12. The shape of the front end of the guide portion 63 may be designed such that the trouble is not generated in the arrangement or insertion of the optical fiber 23 in the case 12.

### Third Embodiment

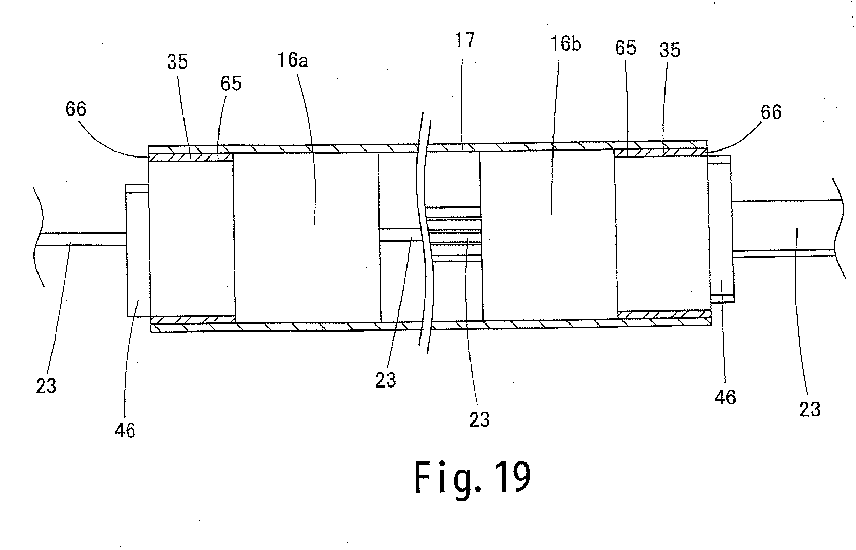

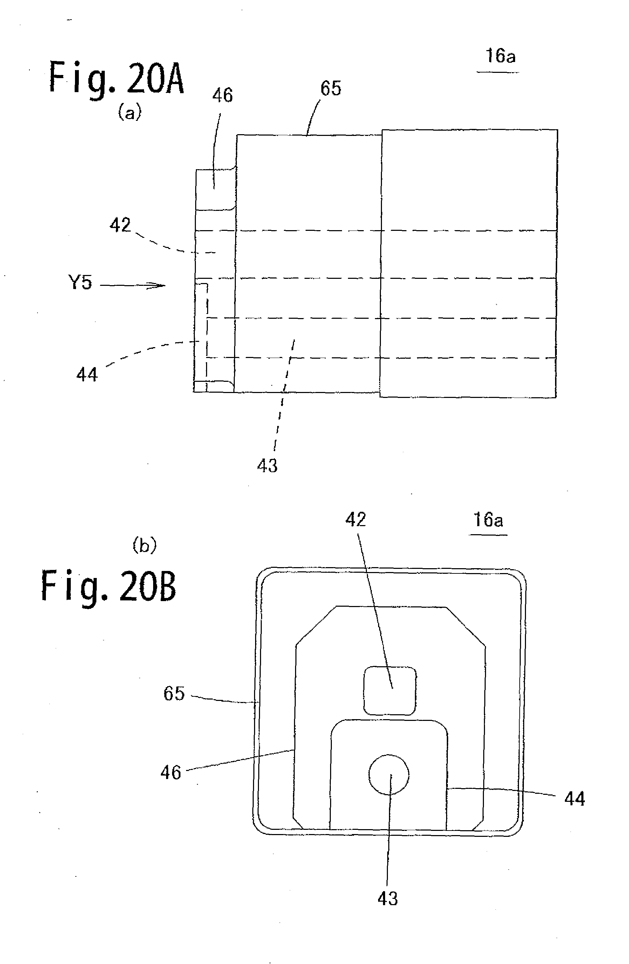

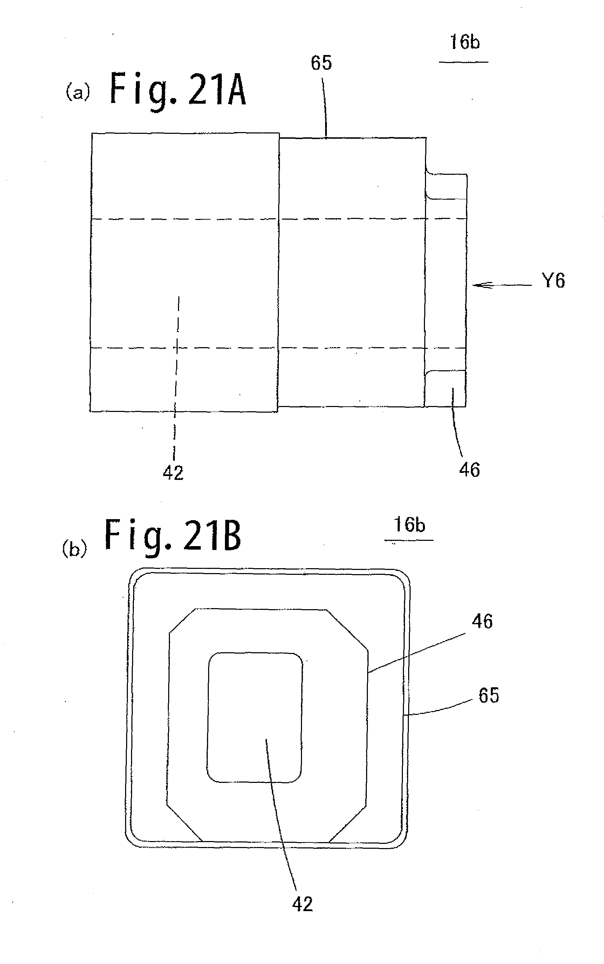

In the optical waveguide module 1 of the first embodiment, the projections 34 are provided in the case 12 to cause the sealing agent 35 to flow easily into the gap between the case 12 and the sealing blocks 13a and 13b. However, because the projections 34 are projected toward the inside of the case 12, sometimes the projections 34 block the insertion of the optical waveguide bare module 11 into the case 12. An optical waveguide module 3 according to a third embodiment of the invention is proposed to solve the problem. In the optical waveguide module 3, steps (hereinafter referred to as step portions 65) are provided around the sealing blocks 16a and 16b such that each outside half of the sealing blocks 16a and 16b are formed slightly thinner than each inside half of the sealing blocks 16a and 16b. This enables a gap 66 to be formed between the sealing blocks 16a and 16b and a case 17 to easily pour the sealing agent 35. Fig. 19 is an enlarged sectional view showing a portion to which the sealing blocks 16a and 16b of the optical waveguide module 3 of the third embodiment are attached. Figs. 20(a) and 21 (a) are side views showing the sealing blocks 16a and 16b. Figs. 20(b) and 21 (b) are views showing the sealing blocks 16a and 16b when viewed from Y5 and Y6 directions of Figs. 20(a) and 21 (a) respectively.

As shown in Figs. 20(a), 20(b), 21 (a), and 21 (b), in the sealing blocks 16a and 16b, the step portion 65 whose height and width are slightly decreased is formed in the outside half. As shown in Fig. 19, the step portion 65 is formed such that the end portion of the case 17 corresponds to the position of the step portion 65 while the gap 66 formed between the step portion 65 and the case 17 is opened to the outside when the sealing blocks 16a and 16b are fixed to the case 17. A difference in height of the step portion 65 is a height in which the sealing agent 35 can be poured between the case 17 and the step portion 65. In the third embodiment, the difference in height is set to about 20 µm which is substantially equal to the height of the projection 34 provided in the case 12. As shown in Fig. 19, the projection 34 is not formed in the case 17, and the wall surface of the hollow portion 33 is smoothly formed.

Thus, the step portions 65 are provided not on the side of the case 17, but in the sealing blocks 16a and 16b, and the gap 66 for pouring the seal agent 35 is formed between the case 17 and the sealing blocks 16a and 16b. Therefore, it is not necessary to form the projection 34 in the case 17, and the optical waveguide bare module 11 is not hooked in the projection 34 when inserted into the case 17. Accordingly the efficiency can be improved in the assembly.

### Fourth Embodiment

In the process of assembling the optical waveguide module 1 of the first embodiment, for the sealing of the evacuation hole 43 in the sealing block 13a, as shown in Fig. 14, the bonding agent 37 is poured into the evacuation hole 43 while the suction of the bonding agent 37 into the evacuation hole 43 and the degree of filling are confirmed, and the sealing plate 45 is attached to seal the evacuation hole 43 when the degree of filling becomes proper. However, unfortunately it takes a significantly long time for the work. In order to solve the problem, an optical waveguide module 4 according to a fourth embodiment of the invention proposes a configuration in which the evacuation hole 43 of the sealing block 18a is easily sealed.

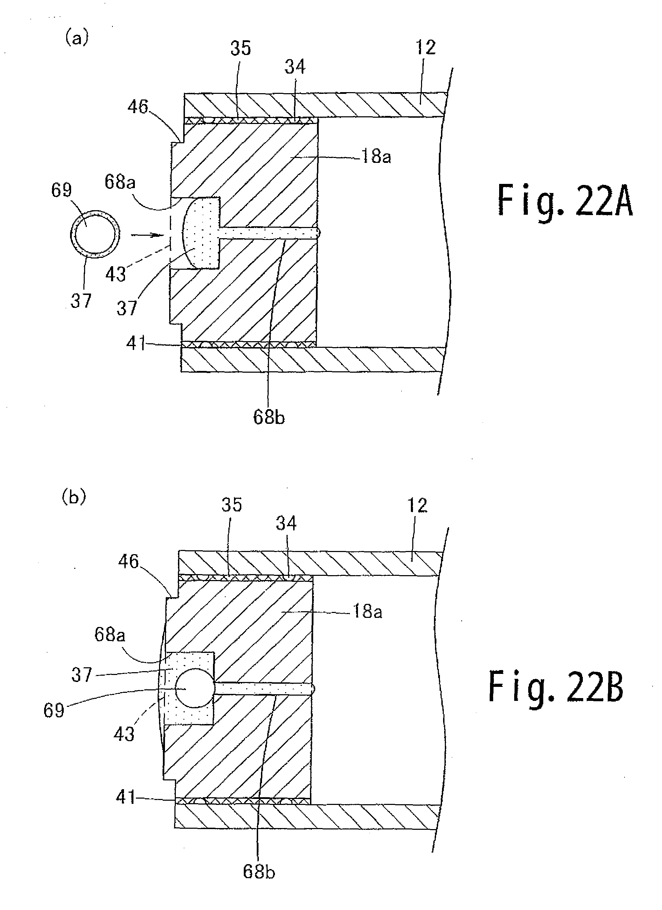

Figs. 22(a) and 22(b) show sealing structures of the evacuation hole 43 of the sealing block 18a respectively. The evacuation hole 43 of the sealing block 18a is configured by combining two sealing holes 68a and 68b having different opening diameters. The sealing hole 68a is opened from the surface of the sealing block 18a orientated toward the outside of the case 12, and the sealing hole 68b is opened from the surface of the sealing block 18a orientated toward the inside of the case 12. The center axes of the sealing hole 68a and sealing hole 68b are aligned with each other, and the sealing hole 68a and the sealing hole 68b are continuously made in the sealing block 18a. The sealing hole 68b is larger than the sealing hole 68a in the opening diameter, a sphere (hereinafter referred to as sealing ball 69) having an opening diameter larger than that of the sealing hole 68b is inserted in the sealing hole 68a, and the sealing ball 69 is bonded using the bonding agent 37, whereby the sealing hole 68b is closed to block the case 12 such that the air does not invade into the case 12. The sealing ball 69 is made of a material such as the spherical metal or ceramic having the extremely low moisture permeability.

A method of sealing an evacuation hole 43 will be described with reference to Figs. 22(a) and 22(b). As shown in Fig. 22(a), the sealing hole 68b is filled with the bonding agent 37, and the sealing ball 69 to which the bonding agent 37 is previously applied is caused to drop into the sealing hole 68a when the sealing hole 68b is sufficiently with the bonding agent 37. The sealing ball 69 caused to drop in the sealing hole 68a is pulled by the flow of the resin sucked into the sealing hole 68b, the sealing ball 69 contacts the opening portion of the sealing hole 68b as shown in Fig. 22(b), and the bonding agent 37 is hardened at the position where the sealing ball 69 closes the sealing hole 68b. Therefore, the sealing hole 68b is sealed. Because the substantially whole surface of the sealing hole 68b is closed by the sealing ball 69, the moisture hardly invades into the case 12. The previous application of the bonding agent 37 onto the sealing ball 69 improves wettability between the sealing ball 69 and the bonding agent 37 to prevent generation of a bubble in the bonding agent 37.

In the fourth embodiment, the bonding agent 37 is previously applied to the sealing ball 69 in order to improve the wettability with the bonding agent 37 with which the sealing hole 68b is filled. However, the bonding agent 37 is not previously applied to the sealing ball 69 in the case where the reliability can particularly be ensured. In order to improve the wettability between the sealing ball 69 and the bonding agent 37, physical or chemical treatment may previously be performed to the surface of the sealing ball 69.

### Fifth Embodiment

In the process of assembling the optical waveguide module 1 of the first embodiment, when the long optical fiber 23 is connected to the optical waveguide bare module 11, it is necessary that the optical fiber 23 be inserted into each fiber hole 42 of the sealing blocks 13a and 13b from the end portion of the optical fiber 23, which sometimes takes a lot of trouble. A sealing block 19 according to a fifth embodiment of the invention is proposed to solve the problem to facilitate the installation of the sealing block. The sealing block 19 which can be replaced by the sealing block 13a will be described below.

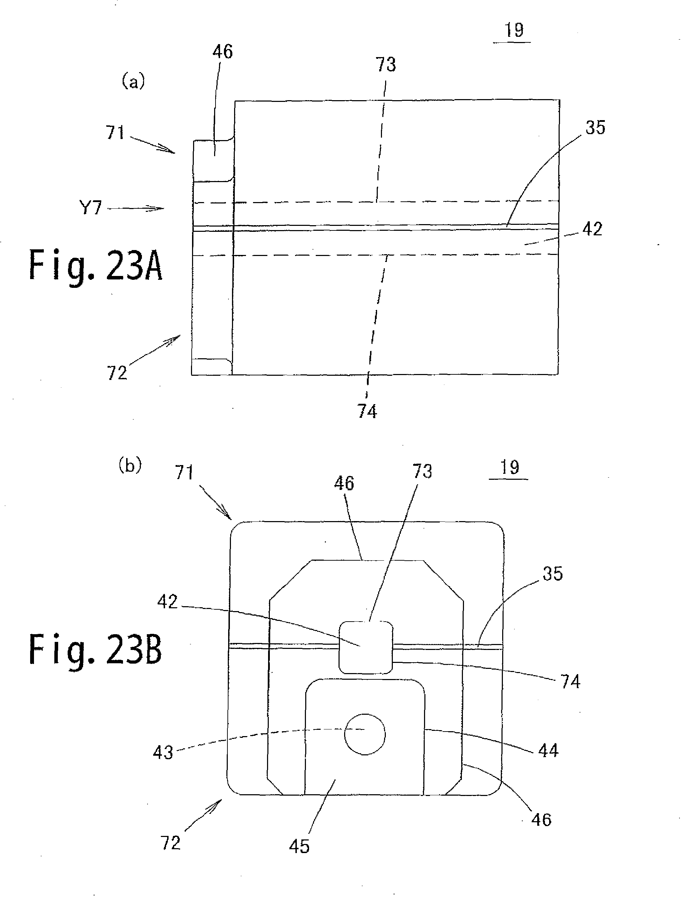

Fig. 23(a) is a side view showing the sealing block 19, and Fig. 23(b) is a view showing the sealing block 19 when viewed from a Y7 direction of Fig. 23(a). The sealing block 19 is formed by bonding an upper part 71 and a lower part 72 using the bonding agent 36. The upper part 71 and the lower part 72 have structures in which the sealing block 13a is vertically divided into two in a plane parallel to the optical axis at the position of a barycenter (or the center of the height) of the fiber hole 42. Grooves 73 and 74 are formed in the lower surface of the upper part 71 and the upper surface of the lower part 72, and the fiber hole 42 is formed by aligning and bonding the lower surface of the upper part 71 and the upper surface of the lower part 72. That is, when the upper part 71 is bonded and fixed using the bonding agent 36 while the optical fiber 23 is placed in the groove 74 of the lower part 72, the optical waveguide module is completed while the optical fiber 23 is inserted in the fiber hole 42 of the sealing block 19.

Accordingly, even if the long optical fiber 23 is connected to the optical waveguide bare module 11, the trouble of inserting the optical fiber 23 into the sealing block 1 from the front end of the optical fiber 23 to move the optical fiber 23 to the neighborhood of the optical waveguide bare module 11 can be eliminated when the sealing block 19 is assembled near the optical waveguide bare module 11 (or case 12).

## Claims

1. An optical waveguide module comprising:
an optical waveguide bare module including an optical waveguide substrate in which an optical circuit is formed in a substrate and an optical fiber array in which one or a plurality of optical fibers are arrayed and fixed;
a hollow and cylindrical case in which the optical waveguide bare module is accommodated; and
blocks which are attached to both ends of the case to seal a hollow portion of the case, wherein
the optical waveguide bare module is disposed in the case and the case is sealed in an airtight manner by inserting the blocks into both the ends of the case.

2. The optical waveguide module according to claim 1, wherein an inside of the case in which the blocks are attached to both the ends thereof is sealed in a reduced-pressure state.

3. The optical waveguide module according to claim 1, wherein an air pressure in the case sealed by attaching the blocks to both the ends thereof is not more than one atmosphere.

4. The optical waveguide module according to claim 1, wherein the optical waveguide bare module is accommodated in the case along with the bare module support member while fixed to a bare module support member.

5. The optical waveguide module according to claim 4, wherein both ends of the bare module support member are bent to form a surface perpendicular to a lengthwise direction of the case.

6. The optical waveguide module according to claim 1, wherein a projection is provided at a position where the block of the case is attached in an inner surface of the case.

7. The optical waveguide module according to claim 1, wherein, in a portion in which a step is provided in an outer peripheral surface of the block so as to be inserted into the case, a sectional area of an outside portion is smaller than a sectional area of an inside portion.

8. The optical waveguide module according to claim 1, wherein an optical fiber hole is made in the block to draw an optical fiber to an outside, and
a gap between the case and the block and the optical fiber hole in the block are filled with a bonding agent or a resin having low moisture permeability and the bonding agent or resin is hardened.

9. The optical waveguide module according to claim 1, wherein an evacuation hole is provided in the block to evacuate air in the case.

10. The optical waveguide module according to claim 1, wherein the block is divided into two.

11. The optical waveguide module according to claim 9, wherein the evacuation hole is sealed by covering an opening thereof with a plate.

12. The optical waveguide module according to claim 9, wherein the evacuation hole is sealed by closing an opening thereof with a ball whose diameter is larger than the opening.

13. The optical waveguide module according to claim 1, wherein the block is made of a material having low moisture permeability.

14. The optical waveguide module according to claim 1, wherein the case is made of a material having low moisture permeability.

15. The optical waveguide module according to claim 1, wherein a sheet absorbing moisture is provided around the optical waveguide bare module.

16. The optical waveguide module according to claim 1, wherein an optical fiber protective member made of an elastic material is attached to an end portion of the block.

17. The optical waveguide module according to claim 16, wherein the optical fiber protective member is attached to the block by fitting a protrusion provided in the block into a recess provided in the optical fiber protective member.
